# EUROPÄISCHE PATENTANMELDUNG

(11) **EP 1 265 147 A2**
(43) Veröffentlichungstag der Anmeldung: **11.12.2002**
(21) Anmeldenummer: 02090199.7
(22) Anmeldetag: 04.06.2002
(51) Int. Cl.: G06F 13/00

(54) **Bus-Konfiguration für einen universellen Melde- und Steuer-Bus**

(30) Priorität: 08.06.2001 DE 10128981
(71) Anmelder: SIEMENS AKTIENGESELLSCHAFT, 80333 München (DE)
(72) Erfinder: Jenkel, Uwe, 38118 Braunschweig (DE)

(57) **Zusammenfassung**

Die Erfindung betrifft eine Bus-Konfiguration für einen UMS-Bus (universeller Melde- und Steuer-Bus), bestehend aus einem Netzwerk mehrerer UMS-Inseln (1), welche ihrerseits mindestens eine UMS-Einheit (2, 3) zum Einlesen von Meldedaten bzw. zum Auslesen von Steuerdaten und zum Verbinden von UMS-Inseln (1) umfassen. Um eine große Anzahl, dezentral anstehender Meldungen an eine Verarbeitungseinheit zu führen und Steuerkommandos auszugeben, wobei Erweiterungen hinsichtlich er Meldungen und Steuerkommandos problemlos projektierbar sein sollen, ist vorgesehen, dass die UMS-Einheit (2, 3) einen Einchiprechner (4) aufweist, wobei die UMS-Einheit (2, 3) einer UMS-Insel (1) über erste serielle Schnittstellen und die UMS-Inseln (1) über zweite serielle Schnittstellen des Einchiprechners (4) vernetzt sind.

## Beschreibung

Die Erfindung betrifft eine Bus-Konfiguration für einen UMS-Bus (universeller Melde- und Steuer-Bus) gemäß dem Oberbegriff des Anspruches 1. Auf vielen Gebieten der Technik, beispielsweise im Schienenfahrzeugbau, nimmt die Bedeutung der Steuer- und Melde-Systeme ständig zu. Immer mehr sensorisch erfasste Parameter müssen an verschiedenen Orten für verschiedene steuerungstechnische Zwecke bereitgestellt werden. Dazu dienen Bus-Netzwerke, die hierarchisch aufgebaut sind. Bei dem gattungsgemäßen UMS-Bus sind die Rechnerknoten bzw. UMS-Inseln in UMS-Einheiten zum Einlesen von Meldedaten bzw. zum Auslesen von Steuerdaten und zum Verbinden der UMS-Inseln aufgeteilt. Auf diese Weise ergibt sich eine relativ geringe Anzahl der zwischen den Meldesystemen und Steuersystemen zu verlegenden Leitungen. Außerdem lässt sich das Routen zwischen Datenquellen und Datensenken optimieren. Problematisch bei dieser Bus-Konfiguration ist das Datenmanagement, d. h. die Projektierung hinsichtlich der UMS-Inseln, der UMS-Einheiten, der Input- und Output-Kontrolle sowie des Routing. Bei nachträglich in die Bus-Konfiguration zu integrierenden Funktionseinheiten muss neben der Anpassung der Kommunikationsstruktur auch eine hardwaremäßige Einbindung der Funktionseinheiten erfolgen. Dies gestaltet sich um so schwieriger, je höher die Datenüberragungsrate auf dem UMS-Bus ist und je sicherer die Übertragung gestaltet werden muss, weil Anpassungsprobleme, die sowohl die Sicherheit als auch die Zuverlässigkeit der Bus-Übertragung beeinträchtigen, zu vermeiden sind.

Der Erfindung liegt die Aufgabe zugrunde, eine Bus-Konfiguration der gattungsgemäßen Art anzugeben, die sich durch geringe Kosten, Nachrüstbarkeit und hohe Übertragungsgeschwindigkeit auszeichnet.

Erfindungsgemäß wird die Aufgabe mit den kennzeichnenden Merkmalen des Anspruches 1 gelöst. Durch die Verwendung handelsüblicher Einchiprechner ergibt sich eine preisgünstige und komfortable Bus-Konfiguration. Weitere Datenquellen und Datensenken, beispielsweise PC's zur Meldungsauswertung oder Steuerkommandoeinspeisung, lassen sich problemlos an mehreren Punkten innerhalb des Netzwerkes anschließen. Als serielle Schnittstellen zur Vernetzung der UMS-Einheiten kommen insbesondere standardisierte RS485-Schnittstellen infrage, während die UMS-Inseln über RS232-Schnittstellen miteinander vernetzt sind. Die Schnittstellen sind über entsprechende Treiber direkt an den Einchiprechner angeschlossen. Der Datenaustausch innerhalb des Netzwerkes lässt sich im Kollisionsverfahren realisieren, wodurch ein schnellerer Datenverkehr als im Pollingverfahren ermöglicht wird.

Gemäß Anspruch 2 sind zwei verschiedene UMS-Einheiten vorgesehen. Die UMS-Einheiten E dienen zum Einlesen von Meldedaten bzw. zum Auslesen von Steuerdaten und die UMS-Einheiten V zusätzlich noch zum Verbinden von UMS-Inseln, wobei die UMS-Einheiten E nur die Schnittstellen zum Verbinden der UMS-Einheiten untereinander aufweisen, während die UMS-Einheiten V zusätzlich die Schnittstellen zur Verbindung der UMS-Inseln aufweisen. Innerhalb einer UMS-Insel können mehrere Doppelschnittstellen - UMS-Einheiten V enthalten sein. Somit ist eine linien- und sternförmige Konfiguration möglich. Der Datenaustausch zwischen den UMS-Inseln erfolgt über die Schnittstellen RS232 Vollduplex. Innerhalb einer Insel ermöglichen die RS485-Schnittstellen einen Datenaustausch im Halbduplex-Verfahren.

Mindestens eine UMS-Insel kann gemäß Anspruch 3 als PC ausgebildet sein. Im Sinne des Datenaustausches ist der PC als UMS-Insel konfiguriert. Ein PC mit Meldedatenbedarf generiert in den UMS-Einheiten V eine Meldespur, auf welcher dann jede UMS-Einheit die Meldedaten überträgt.

Anspruch 4 bezieht sich auf die Ausstattung des Einchiprechners mit einem programmierbaren Speicher für die Implementierung der Bus-Steuermerkmale. Diese Merkmale betreffen insbesondere die Projektierung hinsichtlich UMS-Inseln, UMS-Einheit, Input/Output und Routing. Die Projektierung kann offline von einem PC durch einen Programmieradapter oder online durch einen Programmierjumper, der in der betreffenden UMS-Einheit gesteckt sein muss, geändert werden. Beispielsweise ist projektierbar, welche Bits des Einchiprechners als Eingang für Meldedaten und welche Bits als Ausgang für Steuerdaten genutzt werden. Der üblicherweise einen EEPROM aufweisende Einchiprechner verfügt über 24 Eingänge bzw. Ausgänge - Input/0utput -.

Die Erfindung wird nachfolgend anhand eines figürlich dargestellten Ausführungsbeispieles näher erläutert.

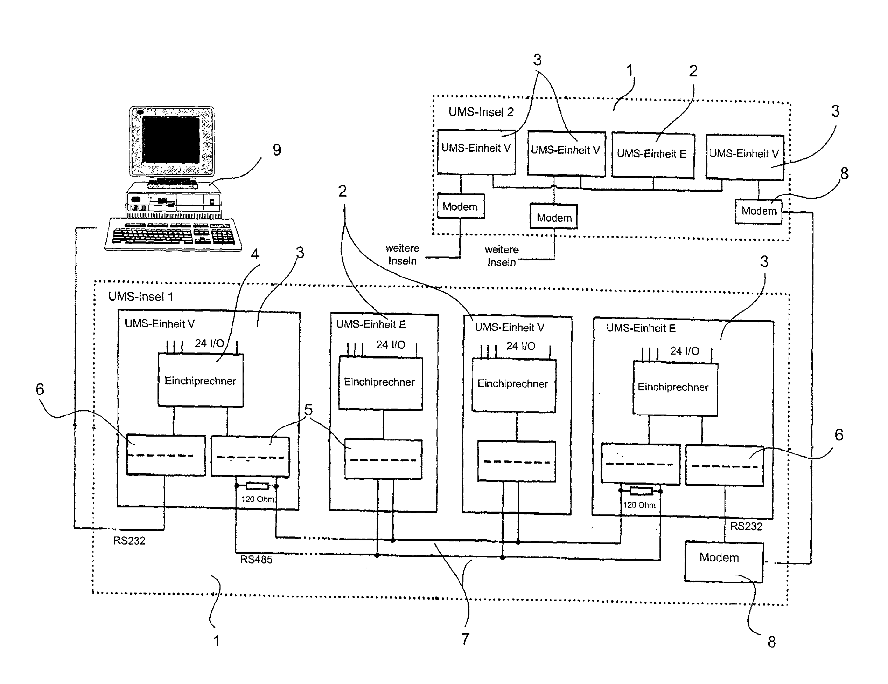

Die Figur zeigt eine schematische Darstellung einer Bus-Konfiguration für einen UMS-Bus.

Im Wesentlichen besteht der UMS-Bus aus UMS-Inseln 1, welche jeweils in UMS-Einheiten E 2 und UMS-Einheiten V 3 unterteilt sind. Alle UMS-Einheiten 2 und 3 sind mit einem Einchiprechner 4 ausgestattet. Dieser besitzt jeweils 24 I/O (Input/Output) -Anschlüsse, die für Meldeinformationen und Steuerbefehle wahlweise belegbar sind. Die zu den UMS-Einheiten V 3 gehörenden Einchiprechner 4 sind über erste Treiber 5 an Schnittstellen RS485 und über zweite Treiber 6 an Schnittstellen RS232 angeschlossen. Die RS485-Schnittstellen sind über eine verdrillte Zweidrahtleitung mit sämtlichen anderen UMS-Einheiten 2 und 3 der UMS-Insel 1 verbunden. Die Einchiprechner 4 der UMS-Einheiten E 3 sind nur mit dem ersten Treiber 5 geschaltet, dessen Ausgänge an die Zweidrahtleitung 7 angeschlossen sind. Nur die UMS-Einheiten V 3 besitzen die RS232-Schnittstelle und sind über diese Schnittstelle und zwischengeschaltete Modems 8 zur Vernetzung der UMV-Inseln 1 vorgesehen. Eine UMS-Insel 1 kann mehr als zwei UMS-Einheiten V 3 beinhalten, so dass nicht nur linienförmige Struktur, sondern auch sternförmige Struktur oder weitverzweigte Vernetzung der UMS-Inseln 1 möglich ist. In dem Ausführungsbeispiel ist an einer RS232-Schnittstelle ein PC 9 angeschlossen. Der PC 9 ist prinzipiell mit einer UMS-Insel 1 vergleichbar. Im System können auch mehrere PC's 9 installiert sein. Ein PC 9 mit Meldedatenbedarf meldet sich im System an, wobei eine Meldespur in den UMS-Einheiten V 3 markiert wird. Diese UMS-Einheiten V 3 senden dann die Meldedaten über diese Meldespur. Den PC's 9 mit Meldedatenbedarf wird der eventuelle Ausfall einer UMS-Einheit 2 und 3 bzw. UMS-Insel 1 mitgeteilt. Maximal können sich sieben PC's gleichzeitig als PC 9 mit Meldedatenbedarf im System anmelden. Bei Abmeldung oder Ausfall eines PC's 9 kann ein weiterer PC 9 dessen Stelle einnehmen. Für die Ausgabe von Steuerkommandos wird nur ein PC 9 systemweit überwacht, d. h. die Ausgänge der UMS-Einheiten 2 und 3 werden bei Ausfall dieses PC's 9 in einen definierten Zustand - high - geschaltet. Für die Steuerkommandoausgabe kann sich jeder PC 9 anmelden, sofern kein anderer angemeldet ist. Der PC 9 kann im Zusammenwirken mit einem Programmieradapter darüber hinaus auf die Projektierung bezügliche Insel, Einheit I/O, Routing Einfluss nehmen. Die Projektierung ist in EEPROMS der Einchiprechner 4 abgelegt. Über die EEPROMS ist in jeder UMS-Einheit V 3 projektiert, welche der UMS-Inseln 1 von dieser UMS-Einheit V 3 aus erreichbar ist. Jede UMS-Einheit V 3 sendet zyklisch Überlebungstelegramme und überwacht das Eintreffen der Überlebenstelegramme von den benachbarten UMS-Inseln 1. Der Ausfall einer UMS-Insel wird auf diese Weise leicht erkannt und an die Meldespur gesendet. Innerhalb der UMS-Inseln 1 erfolgt der Datenaustausch zwischen den einzelnen UMS-Einheiten 2 und 3 im Kollisionsverfahren. Der Datenverkehr ist dabei schneller als bei dem beispielsweise im Profibus eingesetzten Pollingverfahren. Schneller Datenverkehr ist notwendig, da die Laufzeit eines Meldetelegrammes durch das gesamte Netzwerk anderenfalls u. U. zu lang sein könnte. Die Systemkonfiguration ermöglicht das problemlose Hinzufügen weiterer UMS-Einheiten 2 oder 3, wobei eine passende und noch nicht vergebene Adressierung projektiert werden muss.

Da der UMS-Bus einkanalig projektiert ist, erfolgt die Datenübertragung in signaltechnisch nicht sicherer Weise. Dennoch sind in derartigen Netzwerken verschiedene Maßnahmen zur Erhöhung der Fehlerresistenz und der Ausfallsicherheit möglich. Dazu gehören Lebenstelegramme seitens der Einchiprechner 4 sowie zyklische Abfragen der Pins der Einchiprechner 4.

Die Erfindung beschränkt sich nicht auf das vorstehend angegebene Ausführungsbeispiel. Vielmehr ist eine Anzahl von Varianten möglich, welche auch bei grundsätzlich anders gearteter Ausführung von den Merkmalen der Erfindung Gebrauch machen.

## Patentansprüche

1. Bus-Konfiguration für einen UMS-Bus (universeller Meldeund Steuer-Bus), bestehend aus einem Netzwerk mehrere UMS-Inseln (1), welche ihrerseits mindestens eine UMS-Einheit (2, 3) zum Einlesen von Meldedaten bzw. zum Auslesen von Steuerdaten und zum Verbinden von UMS-Inseln (1) umfassen,
**dadurch gekennzeichnet,**
**dass** die UMS-Einheit (2, 3) einen Einchiprechner (4) aufweist, wobei die UMS-Einheiten (2, 3) einer UMS-Insel (1) über erste serielle Schnittstellen und die UMS-Inseln (1) über zweite serielle Schnittstellen des Einchiprechners (4) vernetzt sind.

2. Bus-Konfiguration nach Anspruch 1,
**dadurch gekennzeichnet,**
**dass** UMS-Einheiten E (2) zum Einlesen von Meldedaten bzw. zum Auslesen von Steuerdaten und UMS-Einheiten V (3) zum Einlesen von Meldedaten bzw. zum Auslesen von Steuerdaten und zum Verbinden von UMS-Inseln (1) vorgesehen sind, wobei die Einchiprechner (4) der UMS-Einheiten E (2) die ersten Schnittstellen und die Einchiprechner (4) der UMS-Einheiten V (3) die ersten und die zweiten Schnittstellen aufweisen.

3. Bus-Konfiguration nach einem der vorangehenden Ansprüche,
**dadurch gekennzeichnet,**
**dass** mindestens eine UMS-Insel als PC (Personalcomputer) (9) ausgebildet ist.

4. Bus-Konfiguration nach einem der vorangehenden Ansprüche,
**dadurch gekennzeichnet,**
**dass** der Einchiprechner (4) einen programmierbaren Speicher für Projektierung, insbesondere hinsichtlich UMS-Insel (1), UMS-Einheit (2, 3), Input/Output (I/O) und Routing, aufweist.
